# EUROPÄISCHE PATENTSCHRIFT

(11) **EP 1 216 414 B1**
(45) Veröffentlichungstag und Bekanntmachung des Hinweises auf die Patenterteilung: **11.01.2006**
(21) Anmeldenummer: 00951423.3
(22) Anmeldetag: 21.07.2000
(51) Int. Cl.: G01N 27/72

(54) **VERFAHREN UND VORRICHTUNG ZUR ZERSTÖRUNGSFREIEN MATERIALCHARAKTERISIERUNG FERROMAGNETISCHER STOFFE**
METHOD AND DEVICE FOR CARRYING OUT THE NONDESTRUCTIVE MATERIAL CHARACTERIZATION OF FERROMAGNETIC SUBSTANCES
PROCEDE ET DISPOSITIF POUR LA CARACTERISATION NON DESTRUCTIVE DE MATERIAUX FERROMAGNETIQUES

(30) Priorität: 27.09.1999 DE 19946240
(43) Veröffentlichungstag der Anmeldung: 26.06.2002
(73) Patentinhaber: Fraunhofer-Gesellschaft zur Förderung der angewandten Forschung e.V., 80686 München (DE)
(72) Erfinder: MEYENDORF, Norbert, D-14552 Mischendorf (DE); RÖSNER, Henrik, D-66793 Saarwellingen (DE); SOURKOV, Alexandre, D-66125 Saarbrücken (DE); MICHEL, Fritz, D-99631 Weissensee (DE)
(74) Vertreter: Rösler, Uwe
(86) Internationale Anmeldenummer: PCT/EP2000/006995
(87) Internationale Veröffentlichungsnummer: WO 2001/023877

(56) Entgegenhaltungen:
- EP-A- 0 683 393
- EP-A- 0 704 686
- DE-A- 19 631 311
- US-A- 4 408 160
- US-A- 5 166 613
- US-A- 5 650 570
- H. HOGNESTAD: "New method for determining absolute stress in ferromagnetic steel via potential drop measurements" MATERIALS SCIENCE AND TECHNOLOGY, Bd. 8, Nr. 7, Juli 1992 (1992-07), Seiten 649-651, XP000941132

## Beschreibung

### Technisches Gebiet

Die Erfindung bezieht sich auf ein Verfahren und die Verwendung einer Vorrichtung zur zerstörungsfreien Materialcharakterisierung und Eigenspannungsmessung eines ferromagnetischen Prüfteils mittels Messung einer, durch eine Erregerstromdurchflutung des Prüfteils oder durch mechanische Verformung des Prüfteils verursachten hochfrequenten Änderung seines elektrischen Potentials. Ferner dient das Verfahren dem Einsatz ferromagnetischer Referenzwerkstoffe als Temperatur- und Gassensoren.

### Stand der Technik

Es ist bekannt die Eigenschaften von ferromagnetischen Materialien durch mikromagnetische Verfahren zu ermitteln. Das diesen Verfahren zugrundeliegende Prinzip basiert darauf, mittels extern, auf das zu untersuchende ferromagnetische Material aufgezwungener periodischer Ummagnetisierungen die magnetische Domänenstruktur innerhalb des Materials kontinuierlich zu verändern. Hierbei werden Begrenzungen zwischen Bereichen gleicher Magnetisierung, sogenannte Blochwände, durch das Werkstoffgefüge bewegt, die wiederum mit der Mikrostruktur des Werkstoffes in Wechselwirkung treten. Derartige Wechselwirkungen lassen sich als elektromagnetische Signale empfangen, die als sogenanntes Barkhausenrauschen literaturbekannt sind. Durch Auswertung dieser, das Barkhausenrauschen, darstellenden Signale können Informationen über die Mikrostruktur des Werkstoffes und Eigenspannungen erhalten werden. So sind in den Druckschriften DE 43 43 225 C 1, EP 683393 A1 und DE 196 31 311 C2 diesbezügliche Verfahren zur zerstörungsfreien Werkstoffprüfung ferromagnetischer Stoffe beschrieben, mit denen es möglich ist Materialeigenschaften, wie Gefügestrukturen und Materialeigenspannungen zu erfassen.

Diesbezügliche mikromagnetische Wechselwirkungen können auch durch die Messung der Überlagerungspermeabilität, Analyse von Oberwellen sowie durch dynamische Magnetostriktion erfaßt werden.

Auf der Basis dieser mikromagnetischen Vorgänge sind Geräte entwickelt worden und befinden sich in der Anwendung. So wird in an sich bekannter Weise über einen Elektromagnet ein sich periodisch veränderndes Magnetfeld erzeugt und mit Hilfe eines magnetinduktiven Sensors auf der Oberfläche des zu prüfenden Teiles das Barkhausenrauschen empfangen. Ergänzend hierzu wird eine Hallsonde zur Messung und Regelung des Zeitverlaufes der tangentialen Magnetfeldstärke benötigt (Siehe hierzu die DE 43 43 225 C2). Lediglich bei der Oberwellenanalyse ist der Einsatz eines magnetinduktiven Sensors nicht erforderlich. Eine Vereinfachung der Vorrichtung zur Messung mikromagnetischer Prüfgrößen ist in DE 196 31 311 C2 realisiert. Da die Ummagnetisierungsvorgänge über eine Stromdurchflutung angeregt werden und ein Maß für die Anregung der zeitabhängige Verlauf der Stromstärke ist, kann hier auf einen Elektromagnet und eine Hallsonde verzichtet werden. Die Vorrichtung besteht nur noch aus zwei Elektroden und einem magnetinduktiven Sensor. Auf diese Weise ist stets eine feste Sensorgeometrie vorgegeben, die aus einem Elektromagnet bzw. zwei Stromelektroden und einem Sensorelement besteht. Bei einer derart fest vorgegebenen Geometrievorgabe sind jedoch die Einsatzmöglichkeiten einer diesbezüglichen Meßapparatur stark begrenzt.

Allen bekannt gewordenen, gattungsgemäßen Verfahren haftet der Nachteil an, dass zumindest ein magnetinduktiver Sensor oder eine Hallsonde erforderlich ist, der bzw. die auf ein Prüfteil an der Meßposition aufgesetzt werden muß. An unzugänglichen Stellen, bei hohen Temperaturen oder schwierigen Umgebungsbedingungen versagen jedoch die bisher bekannten Prüftechniken.

Aus der WO 89/10558 geht ein Verfahren zur Bestimmung von mechanischen Eigenspannungen in ferromagnetischem Objekten hervor, das zur Ermittlung des Barkhausen-Rauschens Dehnungsmessstreifen einsetzt, die je nach Geometrie des zu untersuchenden Objektes an diesem geeignet angebracht werden müssen. Insbesondere an Objektoberflächen, die für ein derartiges Anbringen von Dehnungsmessstreifen, bspw. durch zu hohe Oberflächentemperaturen ungeeignet sind, kann das bekannte Verfahren nicht eingesetzt werden.

Aus der US 5,650,570 geht ein Verfahren zur Messung mechanischer Spannungen in linearen ferromagnetischen Metallen hervor, bei dem jeweils auf dem Metall zwei Elektroden aufgebracht werden, über die ein Wechselstrom in das Metall eingespeist wird. Beide Elektroden sind darüber hinaus mit einem Analysator verbunden, der das Impedanzmodul des linearen ferromagnetischen Metalls zwischen den beiden Elektroden ermittelt.

### Darstellung der Erfindung

Der Erfindung liegt die Aufgabe zugrunde ein Verfahren sowie die Verwendung einer Vorrichtung zur zerstörungsfreien Materialcharakterisierung und Eigenspannungsmessung eines ferromagnetischen Prüfteils mittels Messung einer, durch eine Erregerstromdurchflutung des Prüfteils oder durch mechanische Verformung des Prüfteils verursachten hochfrequenten Änderung seines elektrischen Potentials derart weiterzubilden, dass die oben stehend zum Stand der Technik aufgezählten Nachteile vermieden werden. Insbesondere gilt es die Möglichkeiten des Verfahrens hinsichtlich seiner Anwendungsvielfalt zu erweitern. Es sollen Möglichkeiten geschaffen werden das Verfahren auch zur Temperaturbestimmung und/oder zur Bestimmung von Gaszusammensetzungen bzw. der chemischen Aktivität bestimmter Prozeßgaszusammensetzungen anzuwenden.

Die Lösung der, der Erfindung zugrundeliegenden Aufgabe ist im Anspruch 1 angegeben. Eine erfindungsgemäße Verwendung einer Vorrichtung zur Durchführung des erfindungsgemäßen Verfahrens ist Gegenstand des Anspruchs 16. Den Erfindungsgedanken vorteilhaft weiterbildende Merkmale sind Gegenstand der Unteransprüche sowie der Beschreibung und den Zeichnungen zu entnehmen. Erfindungsgemäß ist ein gattungsgemäßes Verfahren gemäß des Oberbegriffes des Anspruchs 1 derart weitergebildet, dass ein Prüfteil örtlich oder als ganzes so vormagnetisiert wird, dass bei Änderung des Erregerstroms und/oder der mechanischen Verformung des Prüfteils Ummagnetisierungsvorgänge ausgelöst werden, und dass durch einen mittelbaren oder unmittelbaren elektrischen Abgriff am Prüfteil das elektrische Potential des Prüfteils erfaßt wird, und dass aus dem elektrischen Potential des Prüfteils eine, durch die Ummagnetisierungsprozesse verursachte, hochfrequente Potentialkomponente ermittelt wird, die als hochfrequentes Rauschsignal zur Ermittlung von Prüfgrößen verwendet wird.

Wesentlicher Aspekt des erfindungsgemäßen Verfahrens ist der Verzicht auf jegliche magnetinduktive Sensoren, Hallsonden sowie Elektromagnete, die auf dem bzw. relativ zum Prüfteil positioniert werden müßten, wodurch zum einen der gerätetechnische Aufwand erheblich reduziert ist, andererseits aber bedeutende Vorteile hinsichtlich der Anwendbarkeit des Verfahrens entstehen.
Durch den Wegfall der zu positionierenden Sensoren relativ zum Prüfteil entfällt auch zugleich die Relevanz der Abhebeempfindlichkeit der Sensoren bei der Meßdurchführung. Die Meßergebnisse unterliegen mit dem erfindungsgemäßen Verfahren weniger Störeinflüssen und werden dadurch genauer, da, wie im folgenden noch genauer dargelegt wird, lediglich eine Potentialmessung und eine Stromstärkemessung vorgenommen werden. Hierdurch wird eine weitgehend sensorunabhängige bzw. meßvorrichtungsunabhängige Ermittlung der mikromagnetischen Prüfgrößen möglich. Ferner ist es möglich die mikromagnetischen Prüfgrößen integral über große Prüfteilbereiche zu ermitteln, zugleich erlaubt das Verfahren jedoch auch die Bestimmung der mikromagnetischen Prüfgrößen mit einer hohen Ortsauflösung und Richtungsabhängigkeit. Schließlich ist es möglich mit dem erfindungsgemäßen Verfahren ferromagnetische Referenzwerkstoffe, insbesondere unter schwierigen Umgebungsbedingungen, bspw. bei Platzmangel bzw. mangelnder Zugänglichkeit, hohen Temperaturen sowie bei korrosiven Medien einzusetzen.

Die Potentialmessung am Prüfteil erfolgt mit Hilfe zweier Elektroden, die mit dem Prüfteil kontaktiert werden und mit diesem einen geschlossenen elektrischen Stromkreis bilden, in dem eine Stromquelle vorgesehen ist. Je nach dem magnetischen Verhalten des zu untersuchenden Werkstoffes sowie seiner Querschnittsfläche wird eine zeitlich periodische Stromstärke gewählt, so dass im zu untersuchenden Werkstoff eine ferromagnetische Hysterese durchlaufen werden kann. Dabei ist die elektrische Stromdichte zumindest örtlich im interessierenden Prüfbereich derart hoch einzustellen, dass Ummagnetisierungsvorgänge ausgelöst werden, durch die das zu detektierende Potentialrauschen oder Barkhausenrauschen erzeugt wird. Die Anregung des ferromagnetischen Potentialrauschens kann prinzipiell auch durch eine mechanische Belastung oder eine Kombination aus Stromdurchflutung und mechanischer Belastung erfolgen.

Zur Ermittlung des ferromagnetischen Potentialrauschens wird vorzugsweise zu beiden Seiten des Prüfbereiches ein Potentialabgriff durchgeführt. Durch ein entsprechendes Frequenzfilter wird im Falle einer Anregung des Prüfteils mit Wechselstrom die, der Erregerstromfrequenz entsprechende Wechselspannung - das sogenannte Makropotential, das dem ferromagnetischen Potentialrauschens überlagert ist - ausgefiltert. Auf dieser Weise wird ein hochfrequentes Rauschsignal mit einer Amplitude im µV-Bereich erhalten und entsprechend ausgewertet. Die gewonnene Rauschspannung ist werkstoffspezifisch und wird durch die Wechselwirkung der Blochwandstruktur mit der Mikrostruktur des Werkstoffes bedingt.

Der Potentialabgriff am Prüfteil, durch den das ferromagnetische Potentialrauschen erhalten wird, kann dabei sowohl in Stromflußrichtung als auch senkrecht zur Stromflussrichtung sowie in dazwischen liegenden Richtungen, gemessen werden.

Die Frequenz der elektrischen Stromstärke, die sogenannte Erregerfrequenz kann bis in den kHz-Bereich gewählt werden, da die Impedanz des elektrischen Stromkreises gering ist. Bei Erregerfrequenzen im kHz-Bereich können höhere Signalamplituden des ferromagnetischen Potentialrauschens gemessen werden und bei einer Mittelung der gemessenen Signale über viele Perioden der erregenden Stromstärke (z.B. 200 Perioden) sind kurze Meßzeiten möglich.

Mit einer zunehmenden Erregerfrequenz ist zu erwarten, dass aufgrund von Resonanz-Effekten bei der Wechselwirkung des erregenden Stromes mit der Blochwandstruktur immer größere Rauschamplituden gemessen werden. Dabei sind große und tieferfrequente Blochwandsprünge zu erwarten. Ab einer werkstoffabhängigen Grenzfrequenz wird erwartet, dass keine Ummagnetisierungsvorgänge mehr angeregt werden können.

Neben der Erregerfrequenz ist das ferromagnetische Potentialrauschen auch vom Werkstoffvolumen, über dem der Potentialabgriff erfolgt, abhängig. Mit einem zunehmenden Werkstoffvolumen, das zu irreversiblen Ummagnetisierungsvorgängen angeregt wird, kann eine größere Rauschamplitude gemessen werden. Die Messung des ferromagnetischen Potentialrauschens liefert in diesem Falle integrale Prüfgrößen.

Bei kleinem Elektrodenabstand für den Potentialabgriff ist andererseits auch eine Ortsauflösung möglich, die nur durch das Rauschverhalten des Eingangsverstärkers begrenzt wird.

Von großer Bedeutung ist, dass im gesamten Stromkreis nur das zu untersuchende Prüfteil ferromagnetisch ist oder zumindest nur im Prüfteil eine so hohe Stromdichte aufgebracht wird, dass dort irreversible Ummagnetisierungsvorgänge ausgelöst werden. Die Zuleitungen zum Prüfteil und die Elektroden zur Stromeinprägung sollten vorzugsweise aus nichtferromagnetischen Werkstoffen ausgelegt werden.

Zur Messung und Auswertung der Signale ist eine entsprechende Signalverarbeitung notwendig. Das gemessene elektrische Makropotential mit der überlagerten hochfrequenten Rauschspannung durchläuft zuerst einen Hochpaßfilter zur Filterung des tieffrequenten Makropotentials und einen Vorverstärker. Mit Hilfe einer Gleichrichtung, Frequenzfilterung, Nachverstärkung und einer Tiefpaßfilterung (Demodulation der Signale) kann eine Einhüllende der hochfrequenten Rauschspannung erhalten werden. Eine Auftragung dieser Signale gegen die aktuelle Stromstärke ergibt sogenannte Rauschprofilkurven. Anhand dieser Kurven können unterschiedliche Prüfgrößen, wie z.B. die maximale Rauschamplitude oder die Lage der maximalen Rauschamplitude bei der entsprechenden Stromstärke, definiert werden.

Es können auch andere Prüfgrößen anhand der verstärkten hochfrequenten Signale des ferromagnetischen Potentialrauschens definiert werden, wie z.B. Amplitudenverteilungsspektren oder Abstände zwischen den Rauschpeaks. Für viele Anwendungen kann auch der Prüfgrößenverlauf gegen die Erregerfrequenz oder die Amplitude der Stromstärke (Hochlaufkurven) als charakteristische Meßkurven genutzt werden.

Unter Bezugnahme auf die nachfolgenden Zeichnungen und Ausführungsbeispiele soll überdies gezeigt werden, dass das erfindungsgemäße Verfahren neben der aufgezeigten Möglichkeit einer Werkstoffcharakterisierung auch zur Prozeßkontrolle bei thermochemischer Wärmebehandlung, als Dehnungs- sowie Temperatursensor, wie auch zur Erfassung mikrostruktureller Veränderungen an Rißspitzen geeignet ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1a, b: Schematische Grundanordnung zur Erfassung des ferromagnetischen Potentialrauschens,
- Fig. 2a, b: Stromstärke-Rauschpotential-Diagramm sowie Rauschprofilkurve,
- Fig. 3: Rauschprofilkurven gemessen an unterschiedlichen Stahlqualitäten,
- Fig. 4: Prinzipieller Aufbau eines Sensors zur Überwachung der Atmosphärenaktivität in Industrieöfen,
- Fig. 5: Prinzipieller Aufbau zum Einsatz des Potenialrauschens zur Kontrolle der Rißinitiierung sowie des Rißfortschrittes an Bruchmechanikproben.

### Wege zur Ausführung der Erfindung, gewerbliche Verwendbarkeit

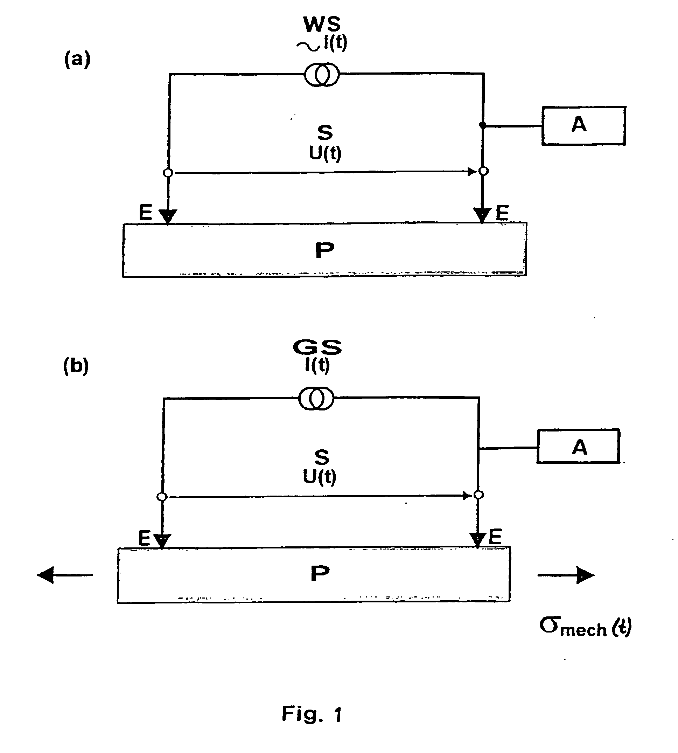

Figur 1 a zeigt eine schematische Meßanordnung zur Erfassung des ferromagnetischen Potentialrauschens bei einem Prüfteil P, das über zwei Elektroden E mit einer Wechselstromquelle WS verbunden ist. Die Kontaktierstellen der Elektroden E an dem Prüfteil P können grundsätzlich beliebig gewählt werden, jedoch kann durch die Elektrodenanordnung der Meßbereich innerhalb des Prüfteils P eingegrenzt werden.

Zugleich dienen die Kontaktierstellen der Elektroden E auch zum Abgriff des elektrischen Potentials, das mit Hilfe einer Spannungsmeßanordnung S erfaßt wird. Zur Ermittlung des ferromagnetischen Potentialrauschens, das dem Makropotential überlagert ist, sind elektrische Filterungen sowie Spannungsverstärkungen nötig, die im Rahmen einer Auswerteeinheit A vorgenommen werden.

Alternativ zur Stromanregung, wie im Ausführungsbeispiel gemäß Figur 1 a dargestellt, kann ferromagnetisches Potentialrauschen prinzipiell auch durch eine, vorzugsweise periodisch erfolgende mechanische Deformation σ_{mech}(t) des Prüfteils P erhalten werden. Dies ist in Figur 1 b dargestellt. Auch ist es möglich die mechanische Deformation σ_{mech}(t), die zeitlich nicht konstant ist, sowie die Stromanregung mit einer Gleichstromquelle GS kombiniert durchzuführen.

Das mittels Frequenzfilterung, die im Rahmen der Auswerteeinheit A erfolgt, erhaltene hochfrequente Rauschsignal, das typischerweise eine Signalamplitude im µV-Bereich aufweist und zur weiteren Signalverarbeitung verstärkt wird.

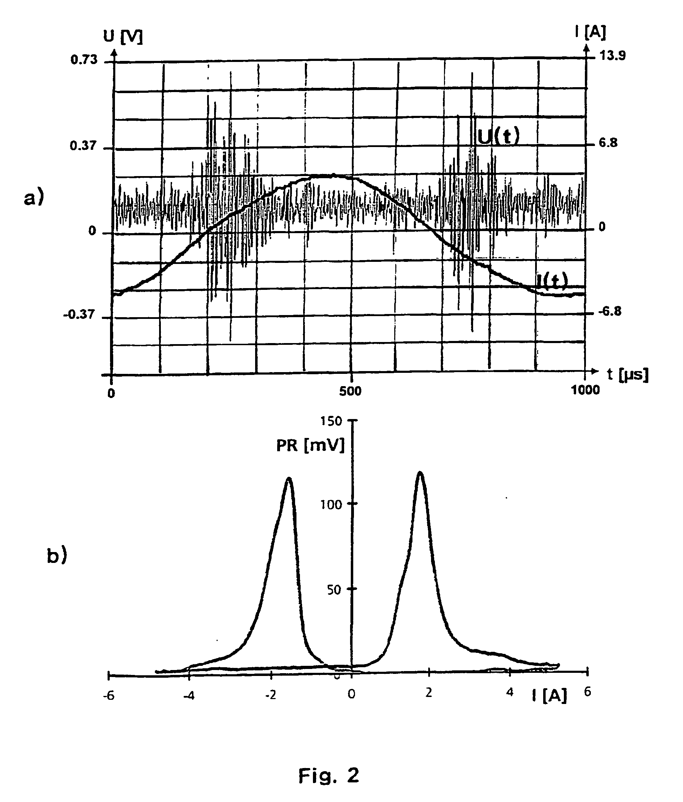

In Figur 2 a ist hierzu in einem Zeit-Spannungs- sowie Zeit-Stromstärke- Diagramm die zeitabhängige Stromstärke I(t) in Bezug zum verstärkten hochfrequenten Signal des ferromagnetischen Potentialrauschens U(t) dargestellt. Aus den charakteristischen Meßverläufen beider Funktionsverläufe können nun, wie im weiteren gezeigt wird für die Werkstoffwahl charakterisierende Rauschprofilkurven PR(I) generiert werden. In Figur 2 b ist eine derartige Rauschprofilkurve PR(I) dargestellt.

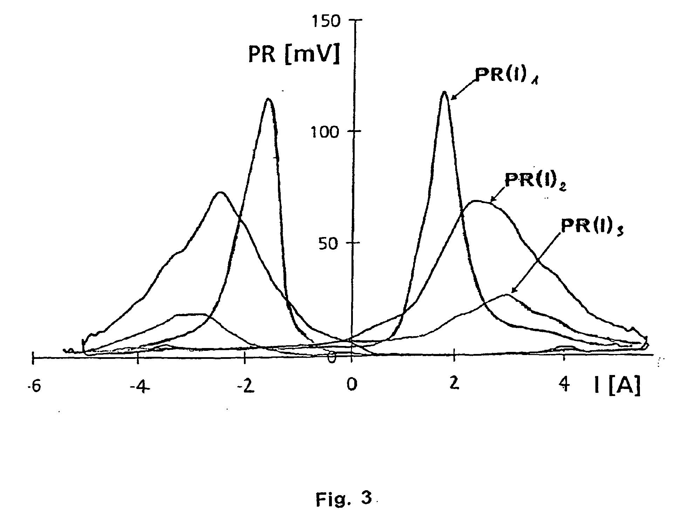

In Figur 3 sind verschiedene Rauschprofilkurven PR(I)₁, PR(I)₂ und PR(I)₃ dargestellt, die an Rundproben (Durchmesser = 2 mm, Länge = 25 mm) unterschiedlicher Stahlqualität gemessen wurden. Mit einer zunehmenden magnetischen bzw. mechanischen Härte der Werkstoffe ist eine Abnahme der Amplitude des ferromagnetischen Potentialrauschens und eine Verschiebung der vorrangigen Rauschaktivität zu höheren Stromstärken zu erkennen. PR(I)₁ repräsentiert die Rauschprofilkurve von Schweißdraht, PR(I)₂von Feinkornbaustahl und PR(I)₃von gehärteten Stahl.

Mit Hilfe dieser beschriebenen Abhängigkeit der Rauschprofilkurven von den verwendeten Werkstoffen ist es überdies auch möglich Prozeßkontrollen bei der thermochemischen Wärmebehandlung von Stählen und ähnlichen Werkstoffen durchzuführen.

So werden in konventionellen Härtereiöfen üblicherweise Sauerstoffsonden zur Prozeßkontrolle eingesetzt. Über die Messung des Sauerstoff-Partialdruckes (Boudouard-Gleichgewicht) wird die Aktivität der Kohlenstoffatmosphäre festgestellt. Zur Qualitätssicherung der thermochemischen Wärmebehandlungen in Vakuumöfen können herkömmliche Sauerstoffsonden aufgrund des vorherrschenden Vakuums jedoch nicht eingesetzt werden. Da eine Wärmebehandlung Schwankungen unterliegt, bedingt z.B. durch Undichtigkeit des Ofens, und die Qualität unter Umständen nicht immer gesichert werden kann, ist es wünschenswert die Ofenatmosphäre auch in Vakuumöfen zu überwachen. Die Aufhärtungsaktivität der Ofenatmosphäre wird dabei durch die Konzentration des Ofengases, die Temperatur und die Strömungsverhältnisse bedingt.

Auf der Basis der Wirbelstromprüfung existieren zwar bereits Verfahren zur Überwachung derartiger Prozesse am Prüfteil (siehe hierzu H. Klümper, Westkamp, F. Hoffmann, P. Mayr: Hochtemperaturbeständige Wirbelstromsensoren zur Charakterisierung des Werkstoffzustandes während der Wärmebehandlung von Stahl; Stiftung Institut für Werkstofftechnik, Bremen Tagungsbandbeitrag DGZFP, Dresden, Jahrestagung (1997)). Die Anwendung dieser Verfahren konnte bisher noch nicht eine solche Verbreitung finden, wie die Sauerstoffsonden in konventionellen Öfen, da einige Probleme auftreten können. Der Sensoraufbau ist aufwendig, da die Messungen im Ofenraum bei hohen Temperaturen, bei ca. 930°C, durchgeführt werden müssen. Außerdem ist häufig eine Anpassung des Sensors an neue Prüfteile erforderlich. Weiterhin kann der Sensor die Aushärtungsverhältnisse am Meßort verfälschen, da die Messung auf dem Bauteil durchgeführt werden muß und somit die Gasströmungsverhältnisse am Meßort verändert werden.

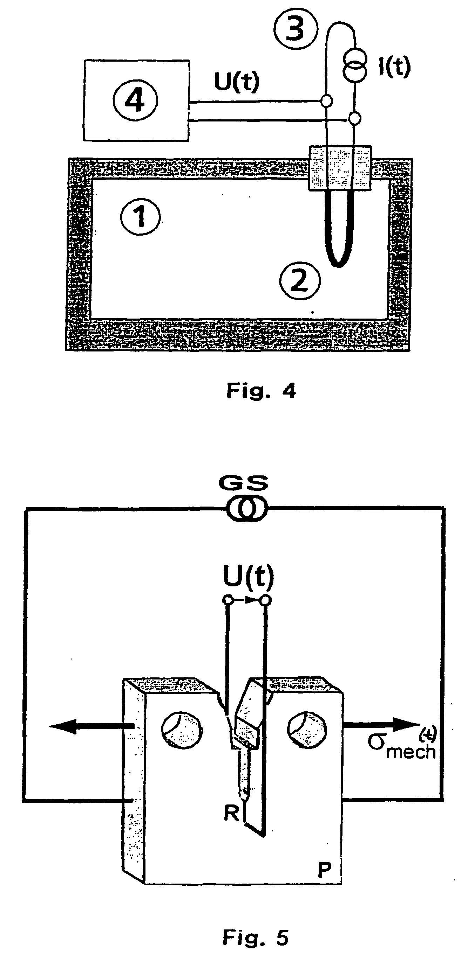

Die Prozeßüberwachung in Vakuumöfen kann nun erfindungsgemäß durch die Messung des ferromagnetischen Potentialrauschens an einem ferromagnetischen Referenzwerkstoff realisiert werden. Das Verfahren basiert darauf, diesen Referenzwerkstoff der Ofenatmosphäre auszusetzen und außerhalb des Ofens die magnetischen Eigenschaften des Referenzwerkstoffes zu überwachen. Der Referenzwerkstoff ändert während des Prozesses aufgrund von Diffusionsvorgängen seinen Chemismus und seine Werkstoffeigenschaften. Eine charakteristische Änderung der magnetischen Eigenschaften während des Prozesses ist somit ein Maß für die Aktivität der Ofenatmosphäre. Dabei ist zu beachten, dass der Referenzwerkstoff eine ausreichend hohe Curie-Temperatur besitzt. Der prinzipielle Aufbau einer derartigen Anordnung ist in Figur 4 dargestellt.

In einem Prozeßofen 1 bildet sich eine vorgebbare Ofenatmosphäre aus, in die ein austauschbarer Referenzdraht 2, als Prüfteil, hineinragt. Alle für die Meßwerterfassung erforderlichen Komponenten 3, wie elektrische Zuleitungen für die Stromdurchflutung des Referenzdrahtes 2 sowie für den Potentialabgriff befinden sich außerhalb des Ofens 1. Eine Signalauswerteeinheit 4 sorgt für die entsprechende Überwachung und Bestimmung der Ofenatmosphärenverhältnisse.

Die Vorteile der Anwendung des erfindungsgemäßen Verfahrens zur Ermittlung der Prozeßatmosphäre innerhalb von Industrieöfen liegen darin, dass die Messung on line erfolgen kann und die Strömungsverhältnisse durch einen andernfalls notwendigen aufgebrachten Sensor nicht verfälscht werden.

Auch sind die mikromagnetischen Prüfgrößen spannungsempfindlich und werden in der Praxis zur Spannungs- und Eigenspannungsmessung genutzt. Das ferromagnetische Potentialrauschens kann ebenso zur Spannungs- und Eigenspannungsmessung genutzt werden. Da die magnetischen Eigenschaften eines Drahtes an den Drahtenden gemessen werden können, ist es möglich ferromagnetische Referenzwerkstoffe zur Dehnungsmessung einzusetzen. Damit sind Dehnmeßstreifen, die die magnetischen Eigenschaften zur Dehnungsmessung nutzen, denkbar.

Spannungs- bzw. verformungsempfindliche ferromagnetische Fasern oder Drähte können in Strukturen aus Kunststoffen, Gläsern, Baustoffen und Verbundwerkstoffen eingebettet werden, um deren Eigenspannungen oder Verformungen zu überwachen.

Der Einsatz ferromagnetischer Referenzwerkstoffe kann ebenso zur empfindlichen Temperaturmessung an unzugänglichen Stellen oder unter problematischen Umgebungsbedingungen genutzt werden. Die ferromagnetischen Eigenschaften sind besonders temperaturempfindlich knapp unterhalb der Curie-Temperatur und erfahren bei sich an die Curie-Temperatur annähernden Temperaturen einen Steilabfall. In diesem Temperaturbereich kommt es zu einer temperaturbedingten Zerstörung der ferromagnetischen Ordnungseinstellung. Voraussetzung ist, dass der Meßbereich unterhalb der Curietemperatur gewählt wird.

Es steht eine Vielzahl von Referenzwerkstoffen mit unterschiedlichen Curie-Temperaturen zur Verfügung, so dass der Einsatz in unterschiedlichen Temperaturbereichen möglich ist. Zum Beispiel weist Kobalt eine Curie-Temperatur von ca. 1120 °C und die Legierung mit dem Handelsnamen Chronoperm 180 °C auf.

Eine weitere Anwendungsmöglichkeit des erfindungsgemäßen Verfahrens ist die Erfassung mikrostruktureller Veränderungen an Rißspitzen von Prüfteilen. Eine Methodik, das duktile Bruchverhalten von Werkstoffen zu beschreiben sowie entsprechende Werkstoffkennwerte abzuleiten, beruht auf dem sogenannten J-Integralkonzept. Die hierfür notwendige Aufstellung von Rißwiderstandskurven (R-Kurven) erfolgt an speziellen mit einem Ermüdungsriß versehenen Probekörpern. Die Genauigkeit der daraus zu bestimmenden bruchmechanischen Kennwerte hängt in entscheidendem Maße von der Überwachung der mikromechanischen Prozesse an der Rißspitze während der Belastung der Probe ab. Eine visuelle Verfolgung dieser Vorgänge ist in der Regel nicht möglich, da diese in der Mitte der nicht zugänglichen Rißfront einsetzen. Die Rißspitzenprozesse - Stretchzonenbildung, Hohlraumbildung, Rißinitiierung, Rißfortschritt - sind in Abhängigkeit von Werkstoffzusammensetzung und Gefügeausbildung mit charakteristischen Signalverläufen des elektromagnetischen Potentialrauschens verknüpft.

Vorteile der Ausnutzung des Potentialrauschens bei der Aufstellung der Rißwiderstandskurve ergeben sich in der höheren erreichbaren Genauigkeit sowie der geringeren Kosten für die Versuchsdurchführung. Darüber hinaus kann in vereinfachender Art und Weise das Potentialrauschen auch für die Überwachung des Wachstums bekannter Risse in Bauteilen im Sinne einer Gefährdungsvorhersage eingesetzt werden. In Figur 5 ist ein prinzipieller Aufbau zum Einsatz des Potenialrauschens zur Kontrolle der Rißinitiierung sowie des Rißfortschrittes an Bruchmechanikproben dargestellt. Das mit einem Riß R versehene Prüfteil P wird in der angegebenen Weise mit Gleichstrom stromdurchflutet 1. Das Prüftteil selbst erfährt eine mechanische Belastung σ_{(mech)}(t), die zeitlich nicht konstant ist.
Unmittelbar am Ort der Rißbildung R erfolgt der Abgriff zur Potentialuntersuchung U(t), die höchstauflösend Aussagen über den weiteren Rißfortschritt zuläßt.

### Bezugszeichenliste

- P: Prüfteil
- E: Elektroden
- WS: Wechselstromquelle
- GS: Gleichstromquelle
- S: Spannungsmeßanordnung
- R: Riß
- A: Auswerteeinheit
- 1: Industrieofen
- 2: Referenzdraht
- 3: Referenzdrahthalter mit elektrischen Zuleitungen für Stromdurchflutung und Potentialabgriff
- 4: Signalauswerteeinheit

## Patentansprüche

1. Verfahren zur zerstörungsfreien Materialcharakterisierung und Eigenspannungsmessung eines ferromagnetischen Prüfteils mittels Messung eines, durch eine Erregerstromdurchflutung des Prüfteils und/oder durch mechanische Verformung des Prüfteils verursachten hochfrequenten, elektrischen Signals,
**dadurch gekennzeichnet, dass** das Prüfteil örtlich oder als ganzes so vormagnetisiert wird, dass bei Änderung des Erregerstroms und/oder der mechanischen Verformung des Prüfteils Ummagnetisierungsvorgänge ausgelöst werden, und dass durch einen mittelbaren oder unmittelbaren elektrischen Abgriff am Prüfteil oder einem Prüfteilbereich das elektrische Potential des Prüfteils erfasst wird, und dass aus dem elektrischen Potential des Prüfteils eine, durch die Ummagnetisierungsprozesse verursachte, hochfrequente Potentialkomponente ermittelt wird, die als hochfrequentes Rauschsignal zur Ermittlung von Prüfgrößen verwendet wird.

2. Verfahren nach Anspruch 1,
**dadurch gekennzeichnet, dass** zur Stromdurchflutung des Prüfteils Wechselstrom verwendet wird, vorzugsweise mit Frequenzen von einigen Hertz bis einigen kHz.

3. Verfahren nach Anspruch 1 oder 2,
**dadurch gekennzeichnet, dass** der Potentialabgriff am Prüfteil bei Erregerstromdurchflutung in Stromflußrichtung oder in beliebiger Richtung oder an einer beliebigen Stelle im Stromkreis erfolgt.

4. Verfahren nach einem der Ansprüche 1 bis 3,
**dadurch gekennzeichnet, dass** aus dem am Prüfteil abgegriffenen Potentialsignal das vom Erregerstrom herrührende Makropotential unterdrückt wird, so dass nur die verbleibende höherfrequente Potentialkomponente, die das Rauschsignal bildet, ausgewertet wird.

5. Verfahren nach einem der Ansprüche 2 bis 4,
**dadurch gekennzeichnet, dass** bei der Auswertung des Rauschsignals über eine Vielzahl, vorzugsweise einige hunderte, von Perioden des Erregerstromes des zeit- und stromstärkeabhängigen Signales gemittelt wird.

6. Verfahren nach einem der Ansprüche 1 bis 5,
**dadurch gekennzeichnet, dass** die Stromdichte bei der Stromdurchflutung des Prüfteils derart gewählt wird, dass im Prüfteil irreversible Ummagnetisierungsvorgänge ausgelöst werden.

7. Verfahren nach einem der Ansprüche 1 bis 6,
**dadurch gekennzeichnet, dass** durch Signalverarbeitung, wie Filterung, Gleichrichtung und Verstärkung, eine Einhüllende des hochfrequenten Rauschsignals generiert wird, die, aufgetragen über der Erregerstromstärke, eine Rauschprofilkurve ergibt, anhand derer Prüfgrößen, und daraus abgeleitet Werkstoffeigenschaften oder Eigenspannungen, erhalten werden.

8. Verfahren nach einem der Ansprüche 1 bis 7,
**dadurch gekennzeichnet, dass** eine Phasenanalyse zwischen dem erregenden Strom bzw. der mechanischen Last und dem auftretenden Rauschsignal erfolgt.

9. Verfahren nach Anspruch 1, 3 und 4,
**dadurch gekennzeichnet, dass** zur Stromdurchflutung des Prüfteils Gleichstrom verwendet wird, und dass das Prüfteil einmalig oder periodisch nacheinanderfolgend mechanischen Belastungen ausgesetzt wird.

10. Verwendung des Verfahrens nach einem der Ansprüche 1 bis 9
zur Erfassung von thermisch und/oder mechanisch induzierten Verformungen oder Eigenspannungen innerhalb des Prüfteils.

11. Verwendung des Verfahrens nach Anspruch 1 bis 8,
**dadurch gekennzeichnet, dass** das Prüfteil als Sensor in ein Trägermaterial eingesetzt wird, um dessen Verformungs- oder Spannungszustand durch Auswertung des vom Prüfteil erzeugten Rauschsignals, zu ermitteln.

12. Verwendung des Verfahrens nach einem der Ansprüche 1 bis 8
zur Überwachung thermochemischer Wärmebehandlung von Gütern.

13. Verwendung des Verfahrens nach Anspruch 12,
**dadurch gekennzeichnet, dass** das Prüfteil einer Atmosphäre im Inneren eines Härterei-,Vakuum- oder Sinterofens ausgesetzt wird und die Rauschsignale eine Aussage über die chemischen und thermischen Bedingungen innerhalb der Ofenatmosphäre ermöglichen.

14. Verwendung des Verfahrens nach einem der Ansprüche 1 bis 9
zur Überwachung einer plastischen Verformung, einer Rißinitiierung sowie dessen Rißfortschritt in Werkstoffen, **dadurch gekennzeichnet, dass** in Folge einer mechanischen Belastung des Werkstoffes, vorzugsweise an einer Rißspitze, das Rauschsignal zur lokalen Werkstoffcharakterisierung und zur Ermittlung des Rißinitiierungspunktes bei Bruchmechanikversuchen herangezogen wird.

15. Verwendung des Verfahrens nach einem der Ansprüche 1 bis 9.
zur Überwachung der Rißinitiierung und des Rißfortschrittes in Werkstoffen, **dadurch gekennzeichnet, dass** das Rauschsignals zur kontinuierlichen Verfolgung des Rißfortschrittes und zur Lebensdauerüberwachung an bruchgefährdeten Bauteilen eingesetzt wird.

16. Verwendung einer Vorrichtung zur zerstörungsfreien Materialcharakterisierung eines ferromagnetischen Prüfteils unter Ausnutzung von im Prüfteil ablaufenden Ummagnetisierungsvorgängen wobei die Vorrichtung mindestens zwei Elektroden, eine Stromquelle und eine Auswerteeinheit aufweist, ,
**dadurch gekennzeichnet, dass** durch die Meßvorrichtung das Prüfteil mittels zweier Elektroden mit einem Erregerstrom ausreichender Stromstärke derart beaufschlagt wird, dass das Prüfteil örtlich oder als ganzes so vormagnetisiert wird, dass bei Änderung des Erregerstroms und/oder der mechanischen Belastung Ummagnetisierungsvorgänge ausgelöst werden und das damit verbundene Potentialrauschen an zwei weiteren Elektroden abgegriffen, von einer Auswerteeinrichtung erfaßt und vom überlagerten, vom Erregerstrom verursachten, Potential getrennt wird.

17. Verwendung nach Anspruch 16,
**dadurch gekennzeichnet, dass** die Elektroden, mittels derer der Erregerstrom eingespeist wird und die Elektroden, mit denen das Potential des Prüfteils abgegriffen wird, identisch sind.

18. Verwendung nach Anspruch 16 oder 17,
**dadurch gekennzeichnet, dass** die Auswerteeinheit einen Verstärker, ein Frequenzfilter und/oder einen Gleichrichter aufweist.

19. Verwendung nach einen der Ansprüche 16 bis 18,
**dadurch gekennzeichnet, dass** eine Darstellungseinheit vorgesehen ist, anhand der das gewonnene Rauschsignal graphisch darstellbar und interpretierbar ist.

## Claims

1. A method for the nondestructive metal characterization and the measurement of stress in the interior of a ferromagnetic device under test by means of measuring a high-frequency electric signal caused by flowing an excitation current through the device under test and/or by the mechanical deformation of said device under test,
**wherein** the device under test is locally or entirely premagnetized in such a manner, that altering said excitation current and/or the mechanical deformation triggers changes in the magnetization processes,
the electric potential of said device under test is detected by means of direct or indirect electric tapping on said device under test or on a region of said device under test and
a high-frequency potential component, which is used as the high-frequency noise signal for determining test parameters, is determined from said electric potential of said device under test caused by the changes in magnetization processes.

2. The method according to claim 1,
**wherein** alternating current is employed for flowing current through said device under test, preferably with frequencies from several Hertz to several kHz.

3. The method according to claim 1 or 2;
**wherein** said potential tapping on said device under test occurs during flowing an excitation current through in the current flow direction or random direction or at random site in the current circuit.

4. The method according to one of the claims 1 to 3,
**wherein** the macropotential coming from the excitation current is suppressed in the potential signal tapped on said device under test so that only the remaining higher frequency potential component forming the noise signal is evaluated.

5. The method according to one of the claims 2 to 4,
**wherein** in evaluating said noise signal, a plurtality, preferably several hundred, periods of excitation current of the time-dependent and current-strength-dependent signal is averaged.

6. The method according to one of the claims 1 to 5,
**wherein** the current density during flowing current through said device under test is selected in such a manner that irreversible changes in magnetization processes are triggered in said device under test.

7. The process according to one of the claims 1 to 6,
**wherein**, by means of signal processing, such as filtering, rectification and amplification, an envelope of said high-frequency noise signal is generated which, plotted versus the excitation current strength, yields a noise profile curve on the basis of which test parameters and material properties or interior stress derived therefrom are obtained.

8. The method according to one of the claims 1 to 7,
**wherein** a phase analysis occurs between the excitation current respectively the mechanical stress and the noise signal setting in.

9. The method according to claim 1, 3 and 4,
**wherein** direct current is used for flowing current through said device under test and said device under test is exposed once or cyclically to successive mechanical stress.

10. Use of the method according to one of the claims 1 to 9 for detection of thermal and/or mechanically induced deformations or internal stress inside said device under test.

11. Use of the method according to claim 1 to 8,
**wherein** said device under test is fixed as a sensor in a carrier material in order to determine its deformation or tension state by evaluating the noise signal generated by said device under test.

12. Use of the method according to one of the claims 1 to 8 for monitoring thermochemcial heat treatment of goods.

13. Use of the method according to claim 12,
**wherein** said device under test is exposed to an atmosphere inside a hardening, vacuum or sintering furnace and the noise signals provide information about the chemical and thermal conditions inside the furnace atmosphere.

14. Use of the method according to one of the claims 1 to 9 for monitoring plastic deformation, crack initiation and crack progression in materials, **wherein** as a consequence of mechanical stress on said material, preferably at a tip of a crack, the noise signal is utilized for local material characterization and for determining the point of crack initiation in mechanical fracturing testing.

15. Use of the method according to one of the claims 1 to 9 for monitoring crack initiation and crack progression in materials **wherein** the noise signal is utilized for continuous monitoring crack progression and for monitoring longevity at components with a risk of fracturing.

16. Use of a device for the nondestructive material characterization of a ferromagnetic device under test utilizing changes in magnetization processes occurring in said device under test, with the device being provided with at least two electrodes, a current source and an evaluation unit,
**wherein**, by means of said measuring device, said device under test is impinged with an excitation current of sufficient strength by means of two electrodes in such a manner that said device under test is locally or entirely premagnetized in such a manner that changing said excitation current and/or the mechanical stress triggers changes in magnetization and the potential noise related thereto is tapped at two further electrodes, detected by the evaluation unit and separated from the superimposed potential caused by said excitation current.

17. The use according to claim 16,
**wherein** the electrodes by means of which said excitation current is entered and the electrodes with which the potential of said device under test is tapped are identical.

18. The use according to claim 16 or 17,
**wherein** said evaluation unit is provided with an amplifier, a frequency filter and/or a rectifier.

19. The use according to one of the claims 16 to 18,
**wherein** a depiction unit is provided with which the gained noise signal can be depicted graphically and can be interpreted.

## Revendications

1. Procédé de caractérisation de matière sans destruction et de mesure de tension propre d'une pièce de test ferromagnétique au moyen d'une mesure d'un signal électrique de haute fréquence provoqué par un passage de courant d'excitation dans la pièce de test et/ou une déformation de la pièce de test, **caractérisé en ce que** la pièce de test est pré-magnétisée localement ou en totalité de manière à ce qu'en cas de modification du courant d'excitation et/ou de la déformation mécanique de la pièce de test, des processus de changement de magnétisation soient déclenchés et que le potentiel électrique de la pièce de test soit enregistré par relevé électrique direct ou indirect sur la pièce de test ou une zone de la pièce de test et **en ce qu'**à partir du potentiel électrique de la pièce de test, on détermine un composant de potentiel à haute fréquence dû aux processus de changement de magnétisation et qui est utilisé comme signal de bruit à haute fréquence pour la détermination de grandeurs de contrôle.

2. Procédé selon la revendication 1,
**caractérisé en ce qu'**on utilise, pour alimenter en courant la pièce de test, du courant alternatif, de préférence à des fréquences allant de quelques Hertz à quelques kHz.

3. Procédé selon la revendication 1 ou 2,
**caractérisé en ce que** le relevé de potentiel sur la pièce de test est réalisé pendant le passage du courant d'excitation, dans le sens d'écoulement du courant ou dans n'importe quel sens ou à n'importe quel endroit du circuit de courant.

4. Procédé selon une des revendications 1 à 3,
**caractérisé en ce qu'**à partir du signal de potentiel relevé sur la pièce de test, le macropotentiel issu du courant d'excitation diminue, de sorte qu'on exploite seulement le composant de potentiel restant à plus haute fréquence qui constitue le signal de bruit.

5. Procédé selon une des revendications 2 à 4,
**caractérisé en ce qu'**à l'exploitation du signal de bruit, on fait une moyenne sur une multitude, de préférence quelques centaines, de périodes de courant d'excitation du signal dépendant du temps et de l'intensité du courant.

6. Procédé selon une des revendications 1 à 5,
**caractérisé en ce que** l'intensité de courant, lors du passage de courant dans la pièce de test, est choisie de manière à déclencher des processus irréversibles de changement de magnétisation dans la pièce de test.

7. Procédé selon une des revendications 1 à 6,
**caractérisé en ce que**, par un traitement des signaux, comme un filtrage, un équilibrage et une amplification, on génère une enveloppante du signal de bruit à haute fréquence qui, appliquée sur l'intensité de courant d'excitation, donne une courbe de profil de bruit sur la base de laquelle on obtient des grandeurs de mesure et des propriétés de matériaux ou tensions propres en dérivant.

8. Procédé selon une des revendications 1 à 7,
**caractérisé en ce qu'**on procède à une analyse de phases entre le courant d'excitation ou la charge mécanique et le signal de bruit apparaissant.

9. Procédé selon les revendications 1, 3 et 4,
**caractérisé en ce qu'**on utilise, pour alimenter en courant la pièce de test, du courant continu et que la pièce de test est exposée une fois ou en succession périodique à des sollicitations mécaniques.

10. Utilisation du procédé selon une des revendications 1 à 9
pour enregistrer les déformations ou tensions propres induites thermiquement et/ou mécaniquement à l'intérieur de la pièce de test.

11. Utilisation du procédé selon une des revendications 1 à 8,
**caractérisée en ce que** la pièce de test est insérée comme capteur dans un matériau porteur afin de déterminer son état de déformation ou de tension par exploitation du signal de bruit généré par la pièce de test.

12. Utilisation du procédé selon une des revendications 1 à 8
pour contrôler le traitement thermique thermochimique de produits.

13. Utilisation du procédé selon la revendication 12,
**caractérisée en ce que** la pièce de test est exposée à une atmosphère à l'intérieur d'un four de durcissement, à vide ou de frittage et que les signaux de bruit permettent d'émettre un avis sur les conditions chimiques et thermiques à l'intérieur de l'atmosphère du four.

14. Utilisation du procédé selon une des revendications 1 à 9
pour surveiller une déformation plastique, une initiation de fissure ainsi que la progression de cette fissure dans des matériaux, **caractérisée en ce qu'**à la suite d'une sollicitation mécanique du matériau, de préférence à une crête de fissure, on utilise le signal de bruit pour la caractérisation locale du matériau et pour déterminer le point d'initiation de la fissure lors d'essais mécaniques de rupture.

15. Utilisation du procédé selon une des revendications 1 à 9,
pour surveiller l'initiation de la fissure et la progression de la fissure dans les matériaux, **caractérisée en ce que** le signal de bruit est utilisé pour le suivi continu de la progression de la fissure et pour le contrôle de la durée de vie des composantes menacées de rupture.

16. Utilisation d'un dispositif de caractérisation de matériau sans destruction d'une pièce de test ferromagnétique en utilisant des processus de changement de magnétisation se déroulant dans la pièce de test, ce dispositif présentant au moins deux électrodes, une source de courant et une unité d'exploitation,
**caractérisée en ce qu'**au moyen du dispositif de mesure, on sollicite la pièce de test au moyen de deux électrodes à l'aide d'un courant d'excitation d'une intensité de courant suffisante de manière à ce que la pièce de test soit pré-magnétisée localement ou en totalité de manière à ce qu'en cas de modification du courant d'excitation et/ou de la sollicitation mécanique, des processus de changement de magnétisation soient déclenchés et que le bruit de potentiel s'y rattachant soit relevé sur deux autres électrodes, enregistré par une unité d'exploitation et isolé du potentiel superposé dû au courant d'excitation.

17. Utilisation selon la revendication 16,
**caractérisée en ce que** les électrodes au moyen desquelles le courant d'excitation est apporté et les électrodes qui permettent de relever le potentiel de la pièce de test sont identiques.

18. Utilisation selon la revendication 16 ou 17,
**caractérisée en ce que** l'unité d'exploitation comporte un amplificateur, un filtre de fréquence et/ou un redresseur.

19. Utilisation selon une des revendications 16 à 18,
**caractérisée en ce qu'**il est prévu une unité de représentation grâce à laquelle le signal de bruit obtenu peut être représenté graphiquement et interprété.
